# EUROPEAN PATENT APPLICATION

(11) **EP 4 657 686 A1**
(43) Date of publication of application: **03.12.2025**
(21) Application number: 24762955.3
(22) Date of filing: 01.02.2024
(51) Int. Cl.: H02H 3/02, H01H 47/02

(54) **POWER CONVERSION APPARATUS**

(30) Priority: 27.02.2023 CN 202310212357
(71) Applicant: Huawei Digital Power Technologies Co., Ltd., Shenzhen, Guangdong 518043 (CN)
(72) Inventor: GAO, Yongbing, Shenzhen, Guangdong 518043 (CN); ZHOU, Xiaoxiang, Shenzhen, Guangdong 518043 (CN); TANG, Junsong, Shenzhen, Guangdong 518043 (CN); XU, Yong, Shenzhen, Guangdong 518043 (CN); HUANG, Xiaoqiang, Shenzhen, Guangdong 518043 (CN)
(74) Representative: Isarpatent
(86) International application number: PCT/CN2024/075295
(87) International publication number: WO 2024/179272

(57) **Abstract**

This application provides a power conversion apparatus. The power conversion apparatus includes a breaking circuit and a control unit, and the breaking circuit includes a main circuit and an auxiliary branch. The main circuit is connected in parallel to the auxiliary branch, and the control unit is configured to control switch devices of the main circuit and the auxiliary branch to be turned on or turned off. The breaking circuit may be configured to protect an alternating current circuit including a mechanical breaking device. When a short-circuit fault occurs in the alternating current circuit, the breaking circuit can rapidly cut off a short-circuit faulty current, to implement mechanical isolation at a point of interruption for the fault. This application can reduce costs of a circuit breaker device in a system, a volume of the circuit breaker device, and an amplitude of a faulty current, shorten duration of a short-circuit current existing after a short-circuit fault occurs, and improve reliability of system fault breaking protection.

## Description

This application claims priority to Chinese Patent Application No. 202310212357.5, filed with the China National Intellectual Property Administration on February 27, 2023 and entitled "POWER CONVERSION APPARATUS", which is incorporated herein by reference in its entirety.

### TECHNICAL FIELD

This application relates to the field of power electronics technologies, and in particular, to a power conversion apparatus.

### BACKGROUND

A mechanical breaking device, for example, a relay, is a common electrical component for controlling circuit connection and disconnection in an alternating current circuit system. When a short-circuit fault occurs in the circuit system, because the relay does not have a capability of cutting off a faulty current, a high short-circuit faulty current is generated in a circuit. If an alternating-current path is not disconnected in time, temperature of a circuit device increases sharply, and a safety accident such as a fire occurs. Therefore, in a conventional technology, a circuit breaker or a fuse is usually connected in series in an alternating current circuit to protect the circuit system. When a conventional circuit breaker performs a breaking action, a circuit breaker around the circuit breaker may mistakenly act or an alternating current copper bar around the circuit breaker may be burnt. In addition, a circuit breaker having a capability of cutting off a high current has a large component size, high costs, and a long delay of a breaking action, and cannot rapidly cut off a faulty current. How to rapidly cut off a faulty current in a system in a simple, convenient, and reliable way becomes an urgent problem to be resolved by a skilled person.

### SUMMARY

This application provides a power conversion apparatus including a breaking circuit, to reduce an amplitude and duration of a faulty current existing after a short circuit occurs in an alternating current circuit system. An implementation is simple, and reliability is high.

According to a first aspect, this application provides a breaking circuit. The breaking circuit includes a main circuit and an auxiliary branch. The main circuit is connected in parallel to the auxiliary branch. The main circuit includes a first mechanical switch. The auxiliary branch includes a second mechanical switch, an overcurrent breaking switch, and a current-limiting circuit switch. The second mechanical switch, the overcurrent breaking switch, and the current-limiting circuit switch are connected in series to form the auxiliary branch. A control unit sends a control signal to the first mechanical switch, the second mechanical switch, and the current-limiting circuit switch of the breaking circuit based on information about a current or a voltage in the main circuit of the breaking circuit, to control the first mechanical switch, the second mechanical switch, and the current-limiting circuit switch to be turned on or turned off. When a short-circuit fault occurs in an alternating current circuit system, the breaking circuit can switch a flow path of a short-circuit current between the main circuit and the auxiliary branch, to finally rapidly cut off the faulty current and implement mechanical isolation at a point of interruption for the fault. Specifically, when the alternating current circuit system works normally, the control unit sends a control signal, the first mechanical switch is in an on state, and the current-limiting circuit switch is in an off state. In this case, a current flows only through the main circuit. When a short-circuit fault occurs in the alternating current circuit system, a high short-circuit current is generated in the main circuit, and the control unit sends a control signal accordingly to control all the current-limiting circuit switch,, the second mechanical switch, and the first mechanical switch to be in an on state. In this case, the current flows through the main circuit and the auxiliary branch, which is equivalent to that a part of the short-circuit current in the main circuit flows to the auxiliary branch, and the current in the main circuit decreases. Then, the control unit sends a control signal to control the first mechanical switch to be turned off. In this case, the entire short-circuit current flows through the auxiliary branch. Because the current in the auxiliary branch increases, the overcurrent breaking switch is rapidly turned off, and the short-circuit current in the auxiliary branch decreases to zero. Finally, the control unit sends a control signal again to control the second mechanical switch to be turned off. This implements mechanical isolation at a point of interruption for the fault. In this application, a device of the breaking circuit is small in size, does not need to be separately disposed like a circuit breaker, and may be integrated into an alternating current device. An implementation is simple and costs are reduced. In addition, due to a circuit design in which the main circuit is connected in parallel to the auxiliary branch and a fast response speed of the current-limiting circuit switch, rapid mechanical isolation at a point of interruption for a fault in the alternating current circuit system can be implemented, and reliability is high.

With reference to the first aspect, in a first possible implementation, the first mechanical switch and the second mechanical switch may be relays, contactors, or other similar mechanical components, are configured to carry a current in an alternating current circuit, and have a breaking distance that meets a system safety regulation. The mechanical components are controlled by the control unit, and may perform a turn-on or turn-off action when a short-circuit fault occurs, to implement mechanical breaking and isolation for the alternating current circuit.

With reference to the first possible implementation of the first aspect, in a second possible implementation, the overcurrent breaking switch may be a fuse having a capability of cutting off a high current, or may be a PCB trace having an appropriate length and width, and is configured to be blown when a short-circuit fault occurs in the alternating current circuit system and a current in the auxiliary branch suddenly increases, to rapidly cut off a short-circuit current.

With reference to the second possible implementation of the first aspect, in a third possible implementation, the current-limiting circuit switch may be a semiconductor device having a switch function, and is configured to control connection and disconnection of the auxiliary branch.

Optionally, the semiconductor device may be an insulated-gate bipolar transistor (IGBT) or a metal-oxide-semiconductor field-effect transistor (MOSFET). The semiconductor device may be made of a silicon semiconductor material Si, a third-generation wide-bandgap semiconductor material such as silicon carbide SiC, gallium nitride GaN, diamond, or zinc oxide ZnO, or another material.

With reference to the third possible implementation of the first aspect, in a fourth possible implementation, the breaking circuit may be disposed in an output alternating-current path of an inverter. When a short-circuit fault occurs in the inside of the inverter, for example, in an inverter bridge, the control unit detects occurrence of the fault, and then controls the breaking circuit to perform a function of cutting off a short-circuit current, to implement mechanical isolation at a point of interruption for the short-circuit fault and ensure safe turn-off of the inverter.

With reference to the fourth possible implementation of the first aspect, in a fifth possible implementation, the breaking circuit may be disposed in two phase output alternating-current paths of a single-phase inverter. The breaking circuit of the single-phase inverter is specifically as follows: In the single-phase inverter, each phase output alternating-current path includes at least one relay, any one output alternating-current path is selected from the two phase output alternating-current paths of the single-phase inverter, and one auxiliary branch of the breaking circuit is connected in parallel at two ends of the relay in the selected output alternating-current path, to form one breaking circuit. The breaking circuit includes a breaking main circuit and a breaking auxiliary branch. The breaking main circuit includes a main relay. The breaking auxiliary branch includes a secondary relay, an overcurrent breaking switch, and a current-limiting circuit switch that are connected in series. The breaking auxiliary branch is connected in parallel at two ends of the breaking main circuit. When a short circuit occurs, there is a short-circuit current in the two output alternating-current paths of the single-phase inverter. Therefore, the breaking circuit of the single-phase inverter can always perform a breaking action, to implement mechanical isolation for the short-circuit fault.

With reference to the fourth possible implementation of the first aspect, in a sixth possible implementation, the breaking circuit may be disposed in an output alternating-current path of a single-phase inverter using two-path interleaved parallel connection. The two-path interleaved parallel connection specifically means that the single-phase inverter includes two output phases, and each output phase includes two output alternating-current paths that are connected in parallel to each other. The breaking circuit of the single-phase inverter is specifically as follows: In two output alternating-current paths that are of a same phase and connected in parallel to each other in the single-phase inverter, any one output alternating-current path includes at least one relay, and auxiliary branches of the breaking circuit are respectively connected in parallel at two ends of two relays of the two output alternating-current paths that are of the same phase and connected in parallel to each other, to form two breaking circuits. However, a difference from the fifth possible implementation of the first aspect lies in that the auxiliary branches of the two breaking circuits share an overcurrent breaking switch and a current-limiting circuit switch. In other words, the two breaking circuits include a first breaking circuit and a second breaking circuit. The first breaking circuit includes a first breaking main circuit and a first breaking auxiliary branch. The first breaking main circuit includes a first main relay. The first breaking auxiliary branch includes a first secondary relay, a first overcurrent breaking switch, and a first current-limiting circuit switch that are connected in series. The first breaking auxiliary branch is connected in parallel at two ends of the first breaking main circuit. The second breaking circuit includes a second breaking main circuit and a second breaking auxiliary branch. The second breaking main circuit includes a second main relay. The second breaking auxiliary branch includes a second secondary relay, the first overcurrent breaking switch, and the first current-limiting circuit switch that are connected in series. The second breaking auxiliary branch is connected in parallel at two ends of the second breaking main circuit. When a short-circuit fault occurs, a short-circuit current is generated in at least one of the two output alternating-current paths that are of the same phase and that are provided with the breaking circuits in the single-phase inverter. In this case, the breaking circuit in the output alternating-current path in which the short-circuit current is generated performs a breaking action, to implement mechanical breaking and isolation for the short-circuit fault in the output alternating-current path.

With reference to the fourth possible implementation of the first aspect, in a seventh possible implementation, the breaking circuit may be disposed in three phase output alternating-current paths of a three-phase inverter. The breaking circuit of the three-phase inverter is specifically as follows: In the three-phase inverter, each phase output alternating-current path includes at least one relay, any two output alternating-current paths are selected from the three phase output alternating-current paths of the three-phase inverter, and auxiliary branches of the breaking circuit are connected in parallel at two ends of relays in the two selected output alternating-current paths respectively, to form two breaking circuits. The two breaking circuits include a third breaking circuit and a fourth breaking circuit. The third breaking circuit includes a third breaking main circuit and a third breaking auxiliary branch. The third breaking main circuit includes a third main relay. The third breaking auxiliary branch includes a third secondary relay, a third overcurrent breaking switch, and a third current-limiting circuit switch that are connected in series. The third breaking auxiliary branch is connected in parallel at two ends of the third breaking main circuit. The fourth breaking circuit includes a fourth breaking main circuit and a fourth breaking auxiliary branch. The fourth breaking main circuit includes a fourth main relay. The fourth breaking auxiliary branch includes a fourth secondary relay, a fourth overcurrent breaking switch, and a fourth current-limiting circuit switch that are connected in series. The fourth breaking auxiliary branch is connected in parallel at two ends of the fourth breaking main circuit. When a short circuit occurs, there is a short-circuit current in at least two output alternating-current paths in the three phase output alternating-current paths of the three-phase inverter. Therefore, there is always one breaking circuit that can perform a breaking action in the third breaking circuit and the fourth breaking circuit of the three-phase inverter, to implement mechanical breaking and isolation for the short-circuit fault.

With reference to the seventh possible implementation of the first aspect, in an eighth possible implementation, the third secondary relay of the third breaking auxiliary branch and the fourth secondary relay of the fourth breaking auxiliary branch may share one coil, to reduce costs and reduce a volume of the breaking circuit.

According to a second aspect, this application provides a control method for a breaking circuit. In a first possible implementation, the control method is applied to the first possible implementation of the first aspect to the eighth possible implementation of the first aspect, and the control method includes:

A magnitude of a current in the main circuit of the breaking circuit is obtained. When the current is less than a first preset value, that is, when an alternating current circuit system is in a normal working state, the first mechanical switch is controlled to be turned on, the second mechanical switch is controlled to be turned on, and the current-limiting circuit switch is controlled to be cut off. In this case, a normal current flows only through the main circuit. When the current is greater than or equal to the first preset value, that is, when the alternating current circuit system is in a short-circuit fault state, the current-limiting circuit switch is controlled to be conducted. In this case, the auxiliary branch forms a path, a part of a faulty current in the main circuit flows to the auxiliary branch, and therefore an amplitude of the faulty current flowing through the main circuit is reduced. Then, the first mechanical switch is controlled to be turned off. In this case, the main circuit becomes open-circuit, and the entire faulty current flows through the auxiliary branch. Therefore, an amplitude of the faulty current flowing through the auxiliary branch increases, the overcurrent breaking switch is blown due to overcurrent, and the faulty current is cut off. Next, the second mechanical switch is controlled to be turned off. After that, both the main circuit and the auxiliary branch are mechanically disconnected, to implement mechanical isolation at a point of interruption for the fault. In this application, the breaking circuit can rapidly reduce an amplitude of a faulty current in the main circuit because a response time of the current-limiting circuit switch is very short, and the breaking circuit can also rapidly extinguish an arc because both the first mechanical switch and the second mechanical switch perform a turn-off action at a low current and voltage. In addition, both the first mechanical switch and the second mechanical switch are in an off state after performing a fault processing action, so that the breaking circuit implements mechanical isolation at a point of interruption for a fault. According to this application, rapid and safe mechanical breaking for a fault can be implemented.

In a second possible implementation of the second aspect, the control method is applied to the first possible implementation of the first aspect to the eighth possible implementation of the first aspect, and the control method includes:

A magnitude of a current in the main circuit of the breaking circuit is obtained. When the current is less than a first preset value, that is, when an alternating current circuit system is in a normal working state, the first mechanical switch is controlled to be turned on, the second mechanical switch is controlled to be turned off, and the current-limiting circuit switch is controlled to be cut off. In this case, a normal current flows only through the main circuit. When the current is greater than or equal to the first preset value, that is, when the alternating current circuit system is in a short-circuit fault state, the second mechanical switch is controlled to be turned on, and then the current-limiting circuit switch is controlled to be conducted. In this case, the auxiliary branch forms a path, a part of a faulty current in the main circuit flows to the auxiliary branch, and therefore an amplitude of the faulty current flowing through the main circuit is reduced. Then, the first mechanical switch is controlled to be turned off. In this case, the main circuit becomes open-circuit, and the entire faulty current flows through the auxiliary branch. Therefore, an amplitude of the faulty current flowing through the auxiliary branch increases, the overcurrent breaking switch is blown due to overcurrent, and the faulty current is cut off. Next, the second mechanical switch is controlled to be turned off. After that, both the main circuit and the auxiliary branch are mechanically disconnected, to implement mechanical isolation at a point of interruption for the fault. In this application, similar to the first possible implementation of the second aspect, the breaking circuit can reduce an amplitude of a faulty current in the main circuit, to implement rapid and safe mechanical breaking for a fault.

With reference to the first possible implementation of the second aspect or the second possible implementation of the second aspect, in a third possible implementation, this application provides a zero-crossing turn-off method for a relay of the main circuit. A specific implementation of the zero-crossing turn-off method for the relay is as follows: A waveform of a current at an output end or an input end of the breaking circuit is obtained. When the waveform of the current is a waveform of a normal working current, the relay of the main circuit is controlled to be turned on. When a short-circuit fault occurs, the waveform of the current is a waveform of a short-circuit faulty current, a cycle of the short-circuit faulty current is the same as a cycle of the normal working current, and a control unit sends a control signal in advance based on the cycle of the short-circuit faulty current and a mechanical delay for the relay of the main circuit to be turned off, to control the relay of the main circuit to be turned off, so that the relay of the main circuit is turned off near a moment at which the current reaches a zero point. Because the relay of the main circuit is turned off near a current zero point, the overcurrent breaking switch of the auxiliary branch is blown by a low current, so that safety of the alternating current circuit system is improved.

### BRIEF DESCRIPTION OF DRAWINGS

FIG. 1 is a schematic of a breaking circuit having a function of protecting an alternating current circuit according to this application;
FIG. 2 is a diagram in which a switch is controlled to be turned off at a zero-crossing of a breaking circuit according to this application;
FIG. 3 shows Embodiment 1 of an application of a breaking circuit according to this application;
FIG. 4 shows Embodiment 2 of an application of a breaking circuit according to this application;
FIG. 5 shows Embodiment 3 of an application of a breaking circuit according to this application;
FIG. 6 shows Embodiment 4 of an application of a breaking circuit according to this application; and
FIG. 7 shows Embodiment 5 of an application of a breaking circuit according to this application.

### DESCRIPTION OF EMBODIMENTS

A breaking circuit provided in this application is a protection circuit of an alternating current circuit system, and implements, when a short-circuit fault occurs in the circuit system, rapid mechanical isolation at a point of interruption for the fault. This application may be applied to protection of an alternating current circuit of a device including a mechanical breaking device such as a mechanical relay. The protected device is, for example, a photovoltaic power generation device, a wind power generation device, or an electric vehicle device.

The following clearly and completely describes technical solutions in embodiments of this application with reference to accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

Implementations of the technical solutions of this application are further described below in detail with reference to the accompanying drawings.

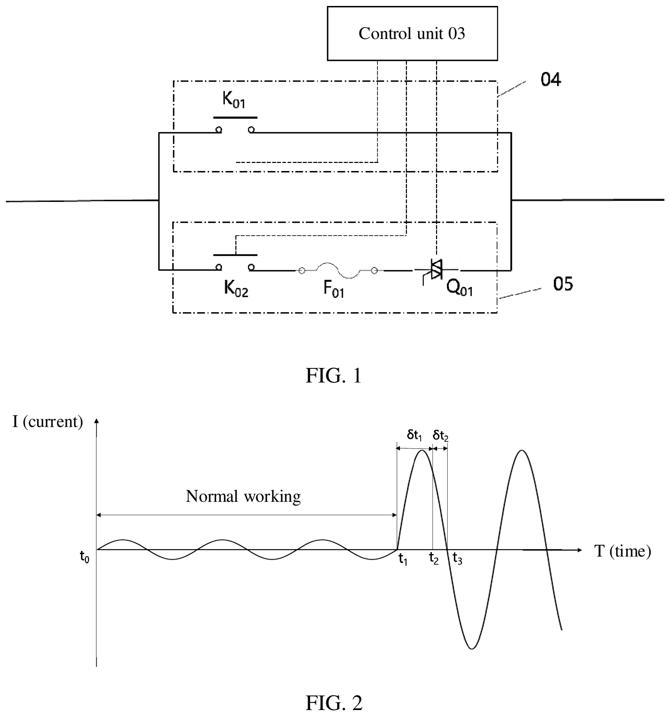

FIG. 1 is a schematic of a breaking circuit having a function of protecting an alternating current circuit according to this application. The breaking circuit provided in this application includes a main circuit 04, an auxiliary branch 05, and a control unit 03. The main circuit 04 is connected in parallel to the auxiliary branch 05. The main circuit 04 includes a first mechanical switch K_01, and the auxiliary branch 05 includes a second mechanical switch K_02, an overcurrent breaking switch F_01, and a current-limiting circuit switch Q_01 that are sequentially connected in series. The control unit 03 may send a control signal to control the first mechanical switch K_01 and the second mechanical switch K_02 to be turned on or turned off and the current-limiting circuit switch Q_01 to be conducted or cut off. The first mechanical switch K_01 and the second mechanical switch K_02 may be relays, contactors, or other types of mechanical breaking components that have a function of carrying a current during normal working and cutting off a current in a case of a fault. The overcurrent breaking switch may be a fuse having a capability of cutting off a high current, or may be a PCB trace having an appropriate length and width, and is configured to be blown when a current suddenly increases, to disconnect the circuit in which the overcurrent breaking switch is located. The current-limiting circuit switch may be a semiconductor device having a switch function, and is configured to control connection and disconnection of the auxiliary branch. The breaking circuit provided in this application implements a breaking function in the following two specific working modes. In a first implementation, when an alternating current circuit system works normally, that is, when a normal working current flows through the breaking circuit, the control unit 03 controls the first mechanical switch K_01 to be turned on, controls the second mechanical switch K_02 to be turned on, and controls the current-limiting circuit switch Q_01 to be cut off. In this case, the current flows only through the main circuit 04. When a short-circuit fault occurs in the alternating current circuit system, that is, when a short-circuit faulty current flows through the breaking circuit, the control unit 03 controls the current-limiting circuit switch Q_01 to be conducted, and the auxiliary branch 05 forms a path. In this case, a part of the short-circuit current in the main circuit 04 flows to the auxiliary branch 04, and the current in the main circuit 04 decreases. Then, the control unit 03 controls the first mechanical switch K_01 to be turned off, and the main circuit 04 becomes open-circuit. In this case, the entire short-circuit current flows in the auxiliary branch 05, and a current flowing through the overcurrent breaking switch F_01 rapidly increases. Therefore, the overcurrent breaking switch F_01 is rapidly blown and the like, the auxiliary branch 05 becomes open-circuit, and the short-circuit current in the breaking circuit decreases to zero. Next, the control unit 03 controls the second mechanical switch K_02 to be turned off. This implements mechanical isolation at a point of interruption for the short-circuit fault. In a second implementation, when the alternating current circuit system works normally, that is, when a normal working current flows through the breaking circuit, the control unit 03 controls the first mechanical switch K_01 to be turned on, controls the second mechanical switch K_02 to be turned off, and controls the current-limiting circuit switch Q_01 to be cut off. In this case, the current flows only through the main circuit 04. When a short-circuit fault occurs in the alternating current circuit system, that is, when a short-circuit faulty current flows through the breaking circuit, the control unit 03 first controls the second mechanical switch K_02 to be turned on, and then controls the current-limiting circuit switch Q_01 to be conducted, and the auxiliary branch 05 forms a path. In this case, a part of the short-circuit current in the main circuit 04 flows to the auxiliary branch 04, and the current in the main circuit 04 decreases. Then, the control unit 03 controls the first mechanical switch K_01 to be turned off, and the main circuit 04 becomes open-circuit. In this case, the entire short-circuit current flows in the auxiliary branch 05, and a current flowing through the overcurrent breaking switch F_01 rapidly increases. Therefore, the overcurrent breaking switch F_01 is rapidly blown and the like, the auxiliary branch 05 becomes open-circuit, and the short-circuit current in the breaking circuit decreases to zero. Next, the control unit 03 controls the second mechanical switch K_02 to be turned off. This implements mechanical isolation at a point of interruption for the short-circuit fault. The breaking circuit provided in this application can effectively reduce an amplitude of a short-circuit circuit in a case in which the first mechanical switch K_01 in the main circuit 04 is turned off, to improve system safety. In addition, the breaking circuit provided in this application has a fast response speed, and a solution is simple.

FIG. 2 is a diagram in which a switch is controlled to be turned off at a zero-crossing of a breaking circuit according to this application. A control method in FIG. 2 may be further applied to a control procedure in FIG. 1. As shown in FIG. 2, a horizontal axis represents a time t, a vertical axis represents an endpoint current I of the breaking circuit, and the endpoint current is a sum of a current in the main circuit and a current in the auxiliary branch in the breaking circuit. In a time period from t_0 to t_1, the endpoint current I is a normal working current, and in this case, an amplitude of the current is small, and a frequency of the current is fixed. At a moment t_1, a short-circuit fault occurs in the system in which the breaking circuit is located, the endpoint current I is a short-circuit faulty current, and in this case, an amplitude of the current is large, but a current frequency of the short-circuit faulty current is the same as that of the normal working current. When a time δt_1 elapses, that is, when the delay δt_1 elapses after the short circuit occurs, the alternating current system sends a control signal for controlling the mechanical switch of the main circuit to be turned off. At a moment t_2, the mechanical switch of the main circuit receives the control signal, and performs a turn-off action. When a time δt_2 elapses, the mechanical switch is completely turned off. δt_2 is a mechanical delay required for the mechanical switch to be completely turned off from receiving the turn-off control signal. At a moment t_3, the mechanical switch of the main circuit is completely turned off.

After the short circuit occurs, the control unit sends, in advance based on the time point at which the short-circuit fault occurs, the frequency of the normal working current, and the mechanical delay for the mechanical switch to be turned off, the signal for controlling the mechanical switch to be turned off, so that the endpoint current is 0 when the mechanical switch is completely turned off. In this way, a current that blows the fuse of the auxiliary branch is low, to improve safety of the alternating current system.

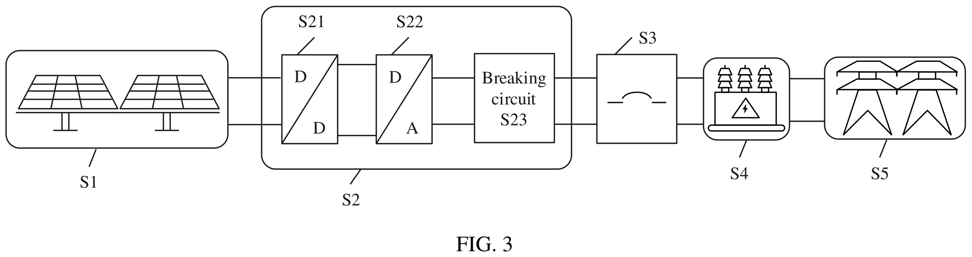

With reference to FIG. 3 to FIG. 7, the following further describes, by using specific embodiments, the breaking circuit provided in this application and a working principle of the breaking circuit.

FIG. 3 shows Embodiment 1 of an application of a breaking circuit according to this application. Embodiment 1 is an application example of the breaking circuit in this application in a photovoltaic power generation system. The photovoltaic power generation system includes a photovoltaic power generation module S1, a photovoltaic inverter S2, a circuit breaker S3, a transformer S4, and an alternating current grid S5. The photovoltaic inverter S2 is connected between the photovoltaic power generation module S1 and the circuit breaker S3, and the transformer S4 is connected between the circuit breaker S3 and the alternating current grid S5. The photovoltaic inverter S2 includes a DC/DC conversion unit S21, a DC/AC inverter circuit S22, and a breaking circuit S23. The DC/AC inverter circuit S22 is connected between the DC/DC conversion unit S21 and the breaking circuit S23. When the photovoltaic power generation system works normally, the photovoltaic power generation module S1 converts solar energy into direct current energy, the DC/DC conversion unit S21 further converts a direct current and sends a converted direct current to the DC/AC inverter circuit S22, and the DC/AC inverter circuit S22 converts the direct current into an alternating current. Because the system is in a normal working state, the breaking circuit S23 and the circuit breaker S3 do not perform a breaking action, and are in a normal state of carrying the alternating current. The alternating current is sent to the transformer S4 for voltage boosting, and finally the alternating current is sent to the alternating current grid S5. When a short-circuit fault occurs in an alternating-current path in the photovoltaic power generation system, the breaking circuit S23 performs a breaking action to rapidly disconnect the alternating-current path, to implement mechanical isolation at a short-circuit fault point and ensure safety of the photovoltaic power generation system. In Embodiment 1, when the photovoltaic inverter S2 includes the breaking circuit S23, the circuit breaker S3 may be retained or removed based on consideration of costs and safety of the photovoltaic power generation system, without affecting a fault breaking function when a short circuit occurs in the photovoltaic power generation system.

For ease of description, in the following embodiments, an example is used for description: The mechanical switch is a relay, the overcurrent breaking switch is a fuse, the current-limiting breaking unit is an IGBT (insulated-gate bipolar transistor, insulated-gate bipolar transistor, IGBT), and a working mode of the breaking circuit is the first implementation in FIG. 1.

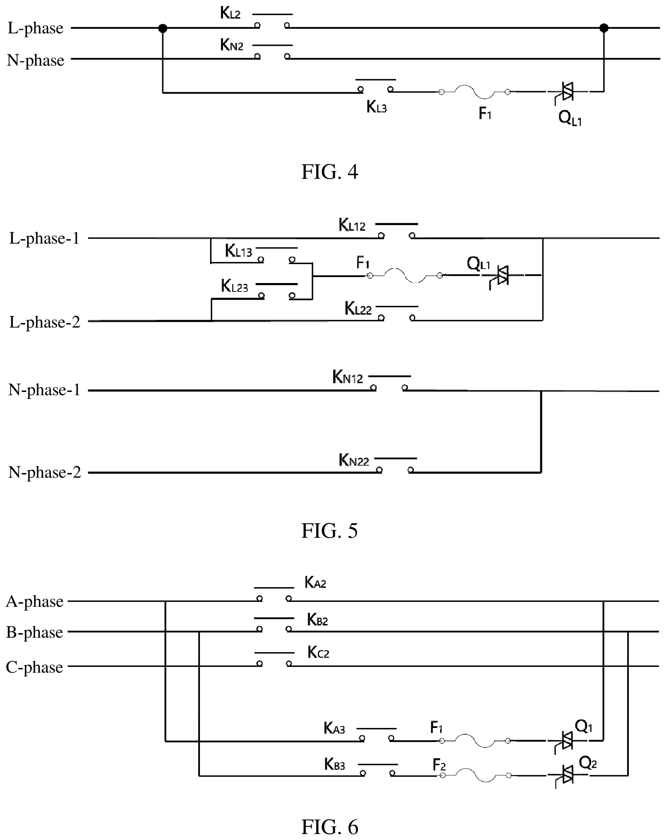

FIG. 4 shows Embodiment 2 of an application of a breaking circuit according to this application. Embodiment 2 is an application case in which the photovoltaic inverter S2 in FIG. 3 of this application is a common single-phase inverter. An output end of the single-phase inverter includes two output alternating-current paths, namely, an L-phase output alternating-current path and an N-phase output alternating-current path. A relay K_L2 and a relay K_N2 are connected in series in the L-phase output alternating-current path and the N-phase output alternating-current path respectively. The alternating-current path in which the relay K_L2 is located is a main circuit, one auxiliary branch is connected in parallel at two ends of the main circuit, the auxiliary branch includes a relay K_L3, a fuse F_1, and an IGBT Q_L1 that are sequentially connected in series, and the main circuit and the auxiliary branch form the breaking circuit. When the single-phase inverter works normally, the relay K_L2 and the relay K_L3 are turned on, and the IGBT Q_L1 is cut off. In this case, a current in the L-phase output alternating-current path flows only through the main circuit. In other words, the current flows through the relay K_L2. When a short-circuit fault occurs in the L-phase output alternating-current path and the N-phase output alternating-current path, the IGBT Q_L1 is conducted. In this case, the auxiliary branch forms a path, a part of the current in the main circuit flows to the auxiliary branch, and therefore the current in the main circuit decreases. Then, the relay K_L2 is safely turned off. In this case, the main circuit becomes open-circuit, and the short-circuit current flows only through the auxiliary branch. Therefore, a current in the auxiliary branch rapidly increases, the fuse F_1 is rapidly blown, the auxiliary branch becomes open-circuit, and the L-phase output alternating-current path and the N-phase output alternating-current path are disconnected. Finally, the relay K_L3 is safely turned off. This implements mechanical isolation at a point of interruption for the short-circuit fault in the L-phase output alternating-current path and the N-phase output alternating-current path. In a process from occurrence of the short-circuit fault to the mechanical isolation at the point of interruption for the short-circuit fault, a time from detection of the occurrence of the short-circuit fault to circuit disconnection is a sum of a time for controlling the IGBT Q_L1 to be conducted and a time for the fuse F_1 to be blown. Therefore, the breaking circuit has a function of rapid breaking. In addition, an amplitude of a short-circuit current in a case in which the relay K_L2 is turned off is greatly reduced, so that the breaking circuit further has a feature of safe breaking. The breaking circuit in this embodiment may alternatively be connected in parallel to the N-phase output alternating-current path.

FIG. 5 shows Embodiment 3 of an application of a breaking circuit according to this application. Embodiment 3 is an application case in which the photovoltaic inverter S2 in FIG. 3 of this application is a single-phase inverter including an inverter circuit using two-path interleaved parallel connection. The single-phase inverter including the inverter circuit using two-path interleaved parallel connection includes L-phase output alternating-current paths and N-phase output alternating-current paths. The L-phase output alternating-current paths include two output alternating-current paths that are of a same phase and connected in parallel to each other, namely, a first L-phase output alternating-current path and a second L-phase output alternating-current path. The N-phase output alternating-current paths include two output alternating-current paths that are of a same phase and connected in parallel to each other, namely, a first N-phase output alternating-current path and a second N-phase output alternating-current path. In this embodiment, one relay is connected in series in each of the four output alternating-current paths in total, and the four relays are a relay K_L12, a relay K_L22, a relay K_N12, and a relay K_N22. Auxiliary branches that share a fuse F_1 and an IGBT Q_L1 are connected in parallel at two ends of the relay K_L12 and the relay K_L22 respectively, the fuse F_1 is connected in series to the IGBT Q_L1, and the auxiliary branches further include a relay K_L13 and a relay K_L23. In other words, the relay K_L12, the relay K_L13, the fuse F_1, and the IGBT Q_L1 form one breaking circuit, and the relay K_L22, the relay K_L23, the fuse F_1, and the IGBT Q_L1 form another breaking circuit. When the single-phase inverter including the inverter circuit using two-path interleaved parallel connection works normally, the relay K_L12, the relay K_L13, the relay K_L22, and the relay K_L23 are turned on, and the IGBT Q_L1 is cut off. In this case, a current in the first L-phase output alternating-current path flows only through a first main circuit. In other words, the current flows through the relay K_L12. A current in the second L-phase output alternating-current path flows only through a second main circuit. In other words, the current flows through the relay K_L22. For example, when a short-circuit fault occurs in the first L-phase output alternating-current path and any one of the first N-phase output alternating-current path and the second N-phase output alternating-current path, the IGBT Q_L1 is conducted, and a part of a short-circuit current in the relay K_L12 flows to the auxiliary branches. Then, the relay K_L12 is turned off, a current flowing through the fuse F_1 rapidly increases, the fuse F_1 is rapidly blown, the auxiliary branches become open-circuit, the first L-phase output alternating-current path and the N-phase output alternating-current path are disconnected. Finally, the relay K_L13 is safely turned off. This implements mechanical isolation at a point of interruption for the short-circuit fault in the first L-phase output alternating-current path and the N-phase output alternating-current path, and the second L-phase output alternating-current path is not affected and allows the current to flow normally. Similarly, when a short-circuit fault occurs in the second L-phase output alternating-current path and any one of the first N-phase output alternating-current path and the second N-phase output alternating-current path, a working principle of the breaking circuit is similar. Similar to the embodiment in FIG. 4, this embodiment also has a feature of rapid and safe breaking. Details are not described herein again. The breaking circuit in this embodiment may alternatively be connected in parallel to the N-phase output alternating-current path.

FIG. 6 shows Embodiment 4 of an application of a breaking circuit according to this application. Embodiment 4 is an application case in which the photovoltaic inverter S2 in FIG. 3 of this application is a common three-phase inverter. An output end of the three-phase inverter includes three output alternating-current paths, namely, an A-phase output alternating-current path, a B-phase output alternating-current path, and a C-phase output alternating-current path. A relay K_A2 is connected in series in the A-phase output alternating-current path, a relay K_B2 is connected in series in the B-phase output alternating-current path, and a relay K_C2 is connected in series in the C-phase output alternating-current path. Any two output alternating-current paths are selected from the three output alternating-current paths, and auxiliary branches are connected in parallel at two ends of relays in the two selected output alternating-current paths respectively. For example, the A-phase output alternating-current path and the B-phase output alternating-current path are selected, a first auxiliary branch is connected in parallel at two ends of the relay K_A2, the first auxiliary branch includes a relay K_A3, a fuse F_1, and an IGBT Q_1 that are sequentially connected in series, and the relay K_A2 and the first auxiliary branch form a first breaking circuit. A second auxiliary branch is connected in parallel at two ends of the relay K_B2, the second auxiliary branch includes a relay K_B3, a fuse F_2, and an IGBT Q_2 that are sequentially connected in series, and the relay K_B2 and the second auxiliary branch form a second breaking circuit. When the three-phase inverter works normally, the relay K_A2, the relay K_B2, the relay K_C2, the relay K_A3, and the relay K_B3 are turned on, and the IGBT Q_1 and the IGBT Q_2 are cut off. In this case, a current in the A-phase output alternating-current path flows only through the relay K_A2, and a current in the B-phase output alternating-current path flows only through the relay K_B2. When a short-circuit fault occurs in the C-phase output alternating-current path and any one of the other two phase output alternating-current paths, for example, when a short-circuit fault occurs in the C-phase output alternating-current path and the B-phase output alternating-current path, the IGBT Q_2 is conducted. In this case, the second auxiliary branch forms a path, and a current flowing through the relay K_B2 decreases. Then, the relay K_B2 is safely turned off. In this case, a current in the second auxiliary branch rapidly increases, the fuse F_2 is rapidly blown, the second auxiliary branch becomes open-circuit, and the C-phase output alternating-current path and the B-phase output alternating-current path are disconnected. Finally, the relay K_B3 is safely turned off. This implements mechanical isolation at a point of interruption for the short-circuit fault in the C-phase output alternating-current path and the B-phase output alternating-current path. When a short-circuit fault occurs in the C-phase output alternating-current path and the A-phase output alternating-current path, a breaking principle is similar to the foregoing case. When a short-circuit fault occurs in the A-phase output alternating-current path and the B-phase output alternating-current path, the control unit selects any one of the IGBT Q_1 and the IGBT Q_2 to be conducted, for example, controls the IGBT Q_1 to be conducted. In this case, the first auxiliary branch forms a path, and a current flowing through the relay K_A2 decreases. Then, the relay K_A2 is safely turned off. In this case, a current in the first auxiliary branch rapidly increases, the fuse F_1 is rapidly blown, the first auxiliary branch becomes open-circuit, and the A-phase output alternating-current path and the B-phase output alternating-current path are disconnected. Finally, the relay K_A3 is safely turned off. This implements mechanical isolation at a point of interruption for the short-circuit fault in the A-phase output alternating-current path and the B-phase output alternating-current path. The common three-phase inverter in this embodiment may alternatively be a three-phase inverter including an inverter circuit using two-path interleaved parallel connection, and a working principle of a breaking circuit of the three-phase inverter is similar to a working principle of the breaking circuit of the single-phase inverter including the inverter circuit using two-path interleaved parallel connection in the embodiment in FIG. 5. Details are not described herein again.

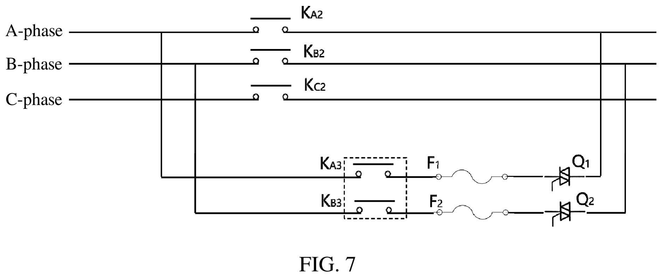

FIG. 7 shows Embodiment 5 of an application of a breaking circuit according to this application. Embodiment 5 is an application case obtained after a relay of an auxiliary branch is improved and designed based on FIG. 6 of this application. In Embodiment 5, the relay K_A3 and the relay K_B3 share one coil winding and are integrated into one relay. A working principle of the breaking circuit is similar to a working principle of the breaking circuit in Embodiment 4 in FIG. 6. Details are not described herein again. The solution of this embodiment can reduce a device volume and costs.

It should be noted that the terms "first" and "second" are merely intended for a purpose of description, and shall not be understood as an indication or implication of relative importance.

For example, the foregoing division into units is merely logical function division and may be other division during actual implementation. For example, a plurality of units or components may be combined or integrated into another system, or some features may be ignored or not performed. In addition, the displayed or discussed mutual connection between components may be indirect coupling or communication connection implemented through some interfaces, devices, or units, and may be implemented in electronic, mechanical, or other forms.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A power conversion apparatus, comprising a DC/AC inverter circuit, a breaking circuit, and a control unit, wherein the breaking circuit is connected to an output end of the DC/AC inverter circuit;
an input end of the DC/AC inverter circuit is used for direct current input, and the output end of the DC/AC inverter circuit is used for alternating current output and is connected to a power grid or an alternating current load through the breaking circuit;
the breaking circuit comprises a main circuit and an auxiliary branch, the main circuit and the auxiliary branch are connected in parallel to each other between the output end of the DC/AC inverter circuit and the power grid or the load, the main circuit comprises a first mechanical switch, the auxiliary branch comprises a second mechanical switch, an overcurrent breaking switch, and a current-limiting circuit switch that are sequentially connected in series, and the breaking circuit is configured to protect the power conversion apparatus when a short-circuit fault occurs;
the first/second mechanical switch comprises mechanical breaking components such as a relay and a contactor;
the overcurrent breaking switch comprises a fuse or a PCB trace;
the current-limiting circuit switch comprises semiconductor devices having a switch function, such as a thyristor and an IGBT; and
the control unit is configured to: when a short-circuit fault occurs in the power conversion apparatus, control the first mechanical switch, the second mechanical switch, and the current-limiting circuit switch to be turned on or turned off, to implement safe and rapid mechanical isolation at a point of interruption for the short-circuit fault.

2. The power conversion apparatus according to claim 1, wherein
the breaking circuit is disposed at an output end of a single-phase power conversion apparatus, and one auxiliary branch of the breaking circuit is connected in parallel to any one phase output circuit of the single-phase power conversion apparatus; or
the breaking circuit is disposed at an output end of a three-phase power conversion apparatus, and two auxiliary branches in total of the breaking circuit are connected in parallel to any two phase output circuits of the three-phase power conversion apparatus respectively.

3. The power conversion apparatus according to claim 1, wherein the control unit is configured to:
obtain a magnitude of a current in the main circuit of the breaking circuit;
when the current in the main circuit is less than a first preset value, control the first mechanical switch and the second mechanical switch to be turned on, and control the current-limiting circuit switch to be turned off; and
when the current in the main circuit is greater than or equal to the first preset value, sequentially control the current-limiting circuit switch to be turned on, control the first mechanical switch to be turned off, and control the second mechanical switch to be turned off.

4. The power conversion apparatus according to claim 1, wherein the control unit is configured to:
obtain a magnitude of a current in the main circuit of the breaking circuit;
when the current in the main circuit is less than a first preset value, control the first mechanical switch to be turned on, and control the second mechanical switch to be turned off and the current-limiting circuit switch to be turned off; and
when the circuit in the main circuit is greater than or equal to the first preset value, sequentially control the second mechanical switch to be turned on, control the current-limiting circuit switch to be turned on, control the first mechanical switch to be turned off, and control the second mechanical switch to be turned off.

5. The power conversion apparatus according to claim 3 or 4, wherein the control unit controls the first mechanical switch to implement zero-crossing turn-off, and the zero-crossing turn-off comprises:
obtaining a current/voltage at an output end of the power conversion apparatus;
obtaining a time at which a short-circuit fault occurs in the power conversion apparatus;
obtaining a time difference between a half of a cycle time of the current/voltage and a mechanical delay of the first mechanical switch, wherein the time difference is denoted as δt; and
sending a turn-off signal to the first mechanical switch when δt elapses after the short-circuit fault occurs in the power conversion apparatus, to complete turn-off of the first mechanical switch when the current/voltage at the output end of the power conversion apparatus is 0, wherein
the zero-crossing turn-off is used to reduce a current that blows the fuse, to improve safety of the power conversion apparatus.

6. The power conversion apparatus according to claim 2, wherein two-path interleaved parallel connection used in a power conversion circuit of the single-phase power conversion apparatus comprises:
any one phase output of the single-phase power conversion apparatus is two output circuits that are of a same phase and connected in parallel to each other;
two output circuits in total as one phase output of two phase outputs of the single-phase power conversion apparatus each are connected in parallel to one auxiliary branch; and
the two auxiliary branches in total share a same overcurrent breaking switch and a same current-limiting circuit switch.

7. The power conversion apparatus according to claim 2, wherein two-path interleaved parallel connection used in a power conversion circuit of the three-phase power conversion apparatus comprises:
any one phase output of the three-phase power conversion apparatus is two output circuits that are of a same phase and connected in parallel to each other;
four output circuits in total as two phase outputs of three phase outputs of the three-phase power conversion apparatus each are connected in parallel to one auxiliary branch; and
two auxiliary branches that are of a same phase in the four auxiliary branches in total share a same overcurrent breaking switch and a same current-limiting circuit switch.

8. The power conversion apparatus according to claim 2, wherein two second mechanical switches in total of the two auxiliary branches in total of the breaking circuit share one coil.

9. A breaking method for a power conversion apparatus, applied to the breaking circuit according to any one of claims 1 to 8, wherein the breaking method comprises:
obtaining a magnitude of a current in the main circuit of the breaking circuit;
when the current in the main circuit is less than a first preset value, controlling the first mechanical switch and the second mechanical switch to be turned on, and controlling the current-limiting circuit switch to be turned off; and
when the current in the main circuit is greater than or equal to the first preset value, sequentially controlling the current-limiting circuit switch to be turned on, controlling the first mechanical switch to be turned off, and controlling the second mechanical switch to be turned off.

10. A breaking method for a power conversion apparatus, applied to the breaking circuit according to any one of claims 1 to 8, wherein the breaking method comprises:
obtaining a magnitude of a current in the main circuit of the breaking circuit;
when the current in the main circuit is less than a first preset value, controlling the first mechanical switch to be turned on, and controlling the second mechanical switch to be turned off and the current-limiting circuit switch to be turned off; and
when the circuit in the main circuit is greater than or equal to the first preset value, sequentially controlling the second mechanical switch to be turned on, controlling the current-limiting circuit switch to be turned on, controlling the first mechanical switch to be turned off, and controlling the second mechanical switch to be turned off.

11. A zero-crossing turn-off method for a mechanical switch of a power conversion apparatus, applied to the mechanical switch according to any one of claims 1 to 8, wherein the zero-crossing turn-off method comprises:
obtaining a current/voltage at an output end of the power conversion apparatus;
obtaining a time at which a short-circuit fault occurs in the power conversion apparatus;
obtaining a time difference between a half of a cycle time of the current/voltage and a mechanical delay of the first mechanical switch, wherein the time difference is denoted as δt; and
sending a turn-off signal to the first mechanical switch when δt elapses after the short-circuit fault occurs in the power conversion apparatus, to complete turn-off of the first mechanical switch when the current/voltage at the output end of the power conversion apparatus is 0.
